# EUROPÄISCHE PATENTANMELDUNG

(11) **EP 0 972 917 A1**
(43) Veröffentlichungstag der Anmeldung: **19.01.2000**
(21) Anmeldenummer: 98113039.6
(22) Anmeldetag: 14.07.1998
(51) Int. Cl.: F02B 23/10

(54) **Viertakt-Verbrennungsmotor und Verfahren zum Betrieb eines derartigen Verbrennungsmotors**

(71) Anmelder: Konotech s.r.o., 150 00 Praha 5 (CZ)
(72) Erfinder: Perewusnyk, Josef, 5442 Fislisbach (CH)
(74) Vertreter: Patentanwälte Schaad, Balass, Menzl & Partner AG

(57) **Zusammenfassung**

Es wird ein Viertakt-Verbrennungsmotor sowie ein Verfahren zum Betrieb eines derartigen Verbrennungsmotors beschrieben, bei dem zur möglichst vollständigen Verbrennung des jeweiligen Brennstoffs und zur Minimierung des Schadstoffausstosses das Einspritzen des Brennstoffs im Ansaugtakt bei geschlossenem Auslassventil im Bereich des oberen Totpunkts des Kolbens beginnt, der Brennstoff in den Brennraum eingespritzt und mit den im Brennraum noch vorhandenen Verbrennungsgasen vermischt und der Brennstoff verdampft wird, worauf das Gemisch aus Brennstoff und Verbrennungsgasen im nachfolgenden Verdichtungstakt mit der in den Zylinderraum eingeströmten Luft intensiv vermischt und ein zündfähiges Gasgemisch gebildet, das mit einer Zündeinrichtung im Bereich des oberen Totpunkt des Kolbens im Brennraum des Kolbens gezündet wird.

## Beschreibung

Die Erfindung betriffl ein Verfahren zum Betrieb eines Viertakt-Verbrennungsmotors sowie einen Viertakt-Verbrennungsmotor nach den Oberbegriffen der unabhängigen Ansprüche 1 und 4.

Bei bekannten Viertakt-Verbrennungsmotoren wird das zündfähige Gemisch von Luft mit Treibstoff, bzw. Brennstoff im Saugrohr zentral für alle Zylinder oder für jeden Zylinder separat aufbereitet. Beim Start und Betrieb bei tieferen Temperaturen kann sich an den kühlen Wänden der Saugrohre oder auch der Zylinderwände Brennstoff niederschlagen. Dies trägt dazu bei, dass der Treibstoff nicht vollständig verbrennt, was wiederum dazu führt, dass im Abgas Schadstoffe wie HC und CO enthalten sind, welche im Katalysator nicht abgebaut werden. Bei heutigen Motoren entstehen selbst bei normalen Betriebstemperaturen, die im Bereich von 400°C liegen sog. HC-Verbindungen, d.h. Kohlenwasserstoff-Verbindungen, als Folge des unvollständig verbrannten Brennstoffs.

In der EP-A1-0 528 166 ist eine Brennkraftmaschine mit weitgehend drallfreier Lufteinströmung in den Brennraum sowie mit einem Kolben beschrieben, der eine flach ausgebildete Kolbenmulde aufweist. Für jeden Einspritzstrahl einer zentral angeordneten Einspritzdüse ist eine Mulde im Kolbenboden vorgesehen. Die Vertiefungen im Kolbenboden haben einen wellenförmigen Verlauf.

Eine Aufgabe der Erfindung ist es, bei Viertakt-Verbrennungsmotoren eine weitestgehend vollständige Verbrennung des jeweiligen Brennstoffs zu gewährleisten und den Schadstoffausstoss zu minimieren.

Diese Aufgabe wird hinsichtlich des Verfahrens zum Betrieb eines Viertakt-Verbrennungsmotors durch die Merkmale des Patentanspruchs 1 und bezüglich der Ausgestaltung eines Viertakt-Verbrennungsmotors im wesentlichen durch die Merkmale des Anspruchs 4 gelöst.

Für das Verfahren nach der Erfindung ist von Bedeutung, dass der Brennstoff in den im Kolbenboden als Mulde vorgebbarer Form ausgebildeten Brennraum gespritzt wird, wo sich noch heisse Verbrennungsgase vom vorhergehenden Arbeitstakt befinden, wobei aufgrund der heissen Wandungen keinerlei Brennstoff kondensiert, sondern der eingespritzte Brennstoff vollständig verdampft und in die Gasphase übergeht. Beim Einspritzvorgang können sich ausserdem die Oberflächen von Zylinder, Zylinderdeckel und selbst des Brennraums im Kolbenboden auf 200°C bis 250°C abkühlen. Bei diesen Temperaturen würde sich das Luft-Brennstoffgemisch selbst bei idealen Lambdawerten im Bereich von etwa λ=1 bis λ=1.1 nicht selbst entzünden.

Beim Saugtakt bleibt das Brennstoffgas weitgehend im Brennraum des Kolbenbodens, vermischt sich also praktisch nicht mit der durch das Einlassventil in den Zylinderraum einströmenden Luft. Das Brennstoffgas, das mit Verbrennungsgasen durchmischt sein kann, wird erst im nachfolgenden Kompressionstakt, und dort erst im Winkelbereich der Kurbelwelle von etwa 40° bis 10°, vorzugsweise 30° bis 20° intensiv und vollständig mit der Luft im Zylindervolumen vermischt. Das zündfähige Brennstoff-Luftgemisch (Gasgemisch) wird dann im Bereich des oberen Totpunktes des Kolbens mit der Zündeinrichtung gezündet. Dabei wird darauf geachtet, dass der Zündfunke im optimalen Zeitpunkt erzeugt wird, welcher zwischen 20° und 5° vor dem Erreichen der oberen Totpunktlage gelegen ist. Dieser optimale Zündzeitpunkt wird vorzugsweise in Abhängigkeit von Last- und Drehzahl elektronisch geregelt.

Dadurch, dass mit dem Verfahren nach der Erfindung die Verbrennung des Treibstoffs verbessert wird, wird der spezifische Brennstoffverbrauchswert verbessert. Darüber hinaus wird der Ausstoss von Schadstoffen, insbesondere bei kaltem Motor unterhalb der Betriebstemperatur verringert.

Die Erfindung ist sowohl bei Zylinder-Kolbenanordnungen mit zwei Ventilen als auch mit vier Ventilen verwendbar, wobei vorzugsweise bei einem Vierventiler der Brennraum annähernd kreiszylinderförmig ausgebildet und die Zündkerze mittig angeordnet ist, während sich die Einspritzdüse zwischen zwei Ventilsitzen befindet und zum Brennraum hin ausgerichtet ist.

Besonders vorteilhafte Ausgestaltungen des Verfahrens nach der Erfindung sowie des erfindungsgemässen Viertakt-Verbrennungsmotors sind in den Unteransprüchen angegeben.

Die Erfindung wird nachstehend anhand der schematischen Zeichnungen, welche ein Beispiel einer erfindungsgemässen Zylinder-Kolbenanordnung zeigen, näher erläutert.

Es zeigen:
- Fig. 1: in einer teilweise geschnittenen Seitenansicht einen Zylinder mit Zylinderdeckel und einen Kolben mit im wesentlichen herzformähnlichem Axialquerschnitt des Brennraums;
- Fig. 2: eine teilweise geschnittene Aufsicht auf den Zylinder, den Zylinderdeckel und den Kolben mit dem Brennraum im Zylinderboden nach Fig. 1;
- Fig. 3: in einer teilweise geschnittenen Seitenansicht eine Zylinder-Kolbenanordnung eines Vierventilers mit im wesentlichen kreiszylinderförmig ausgebildetem Brennraum; und
- Fig. 4: eine teilweise geschnittene Aufsicht auf die Zylinder-Kolbenanordnung des Vierventilers nach Fig. 3.

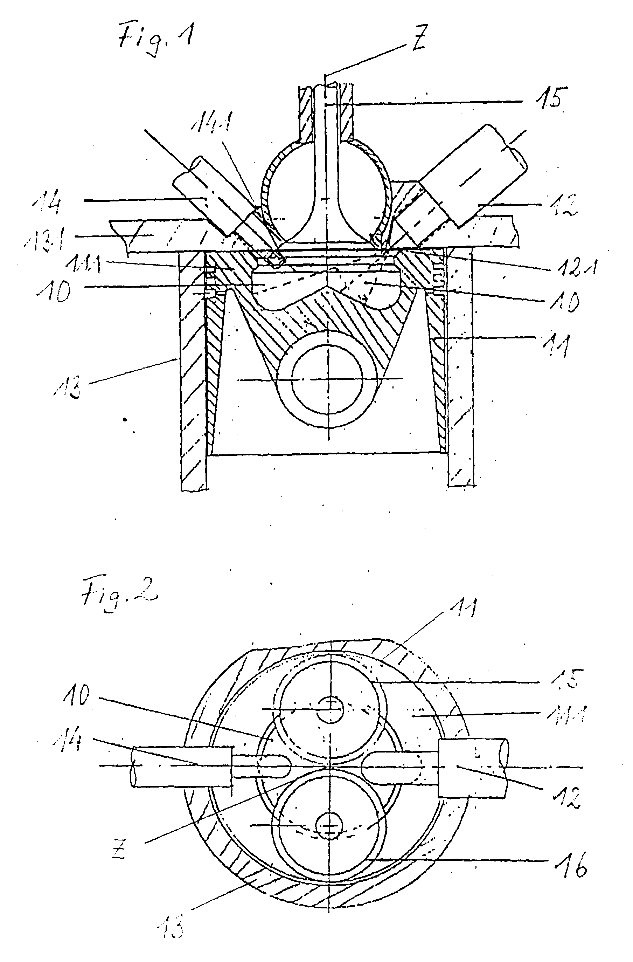

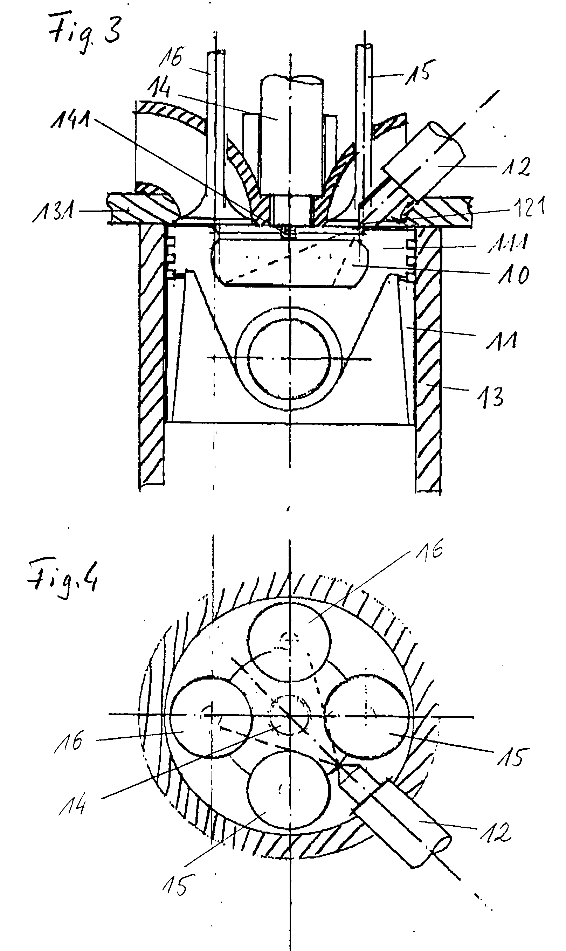

Fig. 1 und Fig. 2 zeigen in einem Querschnitt und in einer Aufsicht einen Kolben 11 mit einem Brennraum 10 im Kolbenboden 111. Der AxialQuerschnitt des Brennraums 10 ist herzformähnlich. Eine Einspritzeinrichtung 12 mit der Einspritzdüse 121 zum Einspritzen des Treibstoffs ist im Deckel 131 des Zylinders 13 befestigt, z.B. eingeschraubt und schräg zum Brennraum 10 gerichtet.

Eine Zündkerze 14 einer Zündeinrichtung 14 ist bezogen auf die Zentralachse Z des Zylinders 13 und des Kolbens 11 der Einspritzeinrichtung 12 gegenüberliegend angeordnet und ebenfalls im Zylinderdeckel 131 befestigt, z.B. eingeschraubt.

Die Zündelektroden 141, mit denen der Zündfunke erzeugt wird, um das zündfähige Brennstoffgemisch zu zünden, ragen in den Zylinderraum, und wenn sich der Kolben 11 im Bereich des oberen Totpunktes (siehe Fig. 1) befindet, auch in den Brennraum 10 im Kolbenboden 111. Ein Einlassventil 15 und ein Auslassventil 16 haben ihren Sitz ebenfalls im Zylinderdeckel 131 und sind, bezogen auf die Zentralachse Z von Zylinder 13 und Kolben 11, ebenfalls symmetrisch angeordnet.

Das zündfähige Treibstoff-Luftgemisch wird wie folgt aufbereitet:

Beim Auspufftakt, bzw. Ausstosstakt bewegt sich der Kolben 11 nach oben und stösst die Auspuffgase bzw. Verbrennungsgase durch das geöffnete Auslassventil 15 in den Auspuff (nicht gezeigt). Das Auslassventil 15 schliesst, wenn sich der Kolben 11 im Bereich des oberen Totpunktes befindet. Sobald das Auslassventil 15 geschlossen ist, wird mit der Einspritzdüse 121 der Einspritzeinrichtung 12 Treibstoff in den Brennraum des Kolbenbodens 111 eingespritzt. Das Einspritzen wird vorzugsweise spätestens bei einer Drehlage der Kurbelwelle von 40° nach dem oberen Totpunkt beendet, wodurch erreicht wird, dass das Einspritzmedium im wesentlichen nur in den Brennraum gelangt.
Durch die Berührung mit den heissen Wänden des Brennraums 10 und durch die Wärme der heissen Verbrennungsgase verdampft der Brennstoff, geht in die Gasform über und vermischt sich mit den heissen Verbrennungsabgasen, die sich noch im Brennraum 10 im Kolbenboden 111 befinden.

Der Kolben 10 bewegt sich nach unten und ist im sog. Ansaugtakt. Beim Ansaugen wird durch das Einlassventil 16 Luft in den Zylinderraum gesaugt.

Das Verbrennungsgas/Brennstoffgemisch im Brennraum 10 ist nicht zündfähig, weil vorerst Sauerstoff fehlt. In der späteren Phase des Saugtakts, aber auch beim nachfolgenden Verdichtungstakt, d.h., wenn sich der Kolben 10 vom unteren Totpunkt wieder nach oben bewegt und sich die angesaugte Luft mit den Gasen im Brennraum 10 vermischt, ist die Temperatur der Dämpfe, die maximal 300°C beträgt, zu niedrig als dass sich das Gemisch entzünden könnte.
Während des Saugtakts verbleiben die Brennstoffdämpfe im wesentlichen im Brennraum 10 und kühlen sich im Bereich der Berührung mit der angesaugten Luft weiter ab.
Die intensive Durchmischung der eingesaugten Luft mit dem Gemisch von Brennstoff und Verbrennungsgasen im Brennraum 10 erfolgt vor allem, wenn sich die Kurbelwelle im Bereich der Lage von 40° bis 0°, vorzugsweise 30° bis 0° vor dem oberem Totpunkt befindet. Im Bereich des oberen Totpunktes des Kolbens 11 wird zwischen den Elektroden 141 der Zündkerze 14 der Zündeinrichtung der Zündfunke erzeugt, welcher das zündfähige Gemisch zündet. Die Erzeugung des Zündfunkens erfolgt im optimalen Zeitpunkt, der zwischen 20° und 5° vor dem Erreichen des oberen Totpunkts gelegen ist. Bevorzugt wird der Zündzeitpunkt in diesem Bereich in Abhängigkeit von Last und Drehzahl elektronisch geregelt. Der Kolben 11 bewegt sich dann beim Arbeitstakt wieder nach unten zum unteren Totpunkt.

Als Brennstoff für einen Viertakt-Verbrennungsmotor nach der Erfindung ist Benzin, aber auch Methanol, Ethanol oder Dieselöl geeignet. Bei einem Dieselmotor als Selbstzünder wäre keine Zündeinrichtung erforderlich. Es hat sich aber als günstig erwiesen, für den Kaltstart eine sog. Glühzündung mit einer Glühzündkerze als Starthilfe zu verwenden. Das Einspritzen von Dieseltreibstoff in den Brennraum 10 im Kolbenboden 111 schon zu Beginn des Ansaugtakts kann als eine Art Voreinspritzung betrachtet werden. Dabei wird eine Voreinspritzmenge von maximal 0,6 Vol.% Brennstoff in der Luft zwischen dem oberen Totpunkt und einer Drehlage der Kurbelwelle von maximal 30° eingespritzt. Die voreingespritzte Brennstoffmenge kann keine Zündung bewirken, dient jedoch der Kühlung durch die benötigte Verdampfungswärme. Ein weiteres Einspritzen von Dieseltreibstoff erfolgt dann im Kompressionstakt entsprechend der geforderten Leistung des Motors zwischen einer Drehlage der Kurbelwelle von 30° vor dem oberen Totpunkt bis zum Erreichen des oberen Totpunktes.

Der Brennraum 10 im Boden 111 des Kolbens 11 hat im gezeigten Beispiel einen herzformähnlichen Querschnitt. Von der Oberfläche des Kolbenbodens 111 aus betrachtet weist der Brennraum 10 einen sog. Hinterschnitt auf. Es versteht sich, dass auch andere Formen des Brennraums geeignet sein können, insbesondere braucht der Brennraum auch nicht rotationssymmetrisch zu sein oder symmetrisch inbezug auf die zentrale Achse Z angeordnet zu sein.

Die Arbeitsweise der Erfindung ist anhand eines Zweiventil-Motors, mit je einem Einlass- und einem Auslassventil beschrieben. Es versteht sich, dass das Arbeitsprinzip auch für sog. Mehrventilmotoren mit mehreren Einlass- und/oder Auslassventilen gilt. Ebenso ist die Erfindung für Motoren mit mehreren Einspritzdüsen oder Zündkerzen pro Zylinder geeignet.

Ein Beispiel für die Anwendung der Erfindung bei einer Zylinder-Kolbenanordnung eines Vierventilers ist in den Fig. 3 und 4 gezeigt. Auch bei dieser Ausführungsform ist die Einspritzeinrichtung 12 mit der Einspritzdüse 121 unter einem Winkel zur Zylinderachse angeordnet und befindet sich zwischen zwei Ventilsätzen, wie dies in Fig. 4 erkennbar ist. Durch die Ausrichtung der Einspritzdüse zum Brennraum 10 hin ist sichergestellt, dass im wesentlichen ein Einspritzen nur in diesem Brennraum 10 erfolgt.

Die Zündeinrichtung 14 ist mittig angeordnet, und die Zündelektroden 141 befinden sich im oberen Totpunkt des Kolbens, der in Fig. 3 gezeigt ist, praktisch im Brennraum 10. Der Brennraum 10 ist in dieser Ausgestaltung etwa kreiszylinderförmig ausgebildet, und es wird im Regelfall angestrebt, kompakte Brennräume vorzusehen, wobei darunter solche Brennräume zu verstehen sind, bei denen das Verhältnis zwischen Oberfläche und Rauminhalt des Brennraumes klein ist, so dass eine Annäherung an die Kugelform erfolgt. Ferner kann gemäss bevorzugter Ausgestaltungen des Brennraums die Tiefe des Brennraums eine Grösse erreichen, die dem Brennraumdurchmesser entspricht.

## Patentansprüche

1. Verfahren zum Betrieb eines Viertakt-Verbrennungsmotors mit mehreren zumindest jeweils ein Ansaug- und ein Auslassventil aufweisenden Zylinder-Kolbenanordnungen mit direkter Brennstoffeinspritzung, wobei in den Kolben der Zylinder-Kolbenanordnungen jeweils eine einen Brennraum bildende Kolbenmulde vorgesehen ist,
dadurch **gekennzeichnet**,
dass das Einspritzen des Brennstoffs mit der Einspritzeinrichtung (12, 121) im Ansaugtakt bei geschlossenem Auslassventil (15) im Bereich des oberen Totpunkts des Kolbens (11) beginnt,
dass der Brennstoff in den Brennraum (10) eingespritzt und mit den Verbrennungsgasen in der Kolbenmulde des Kolbens (11) vermischt wird, wobei sich das Gemisch aus Brennstoff und Verbrennungsgasen erwärmt und der Brennstoff verdampft,
dass das Gemisch aus Brennstoff und Verbrennungsgasen sich weitgehend im Verdichtungstakt mit der beim vorhergehenden Ansaugtakt durch das Einlassventil (16) in den Zylinderraum eingeflossenen Luft vermischt, um ein zündfähiges Gasgemisch zu bilden,
das zündfähige Gasgemisch mit der Zündeinrichtung (14, 141) im Bereich des oberen Totpunktes des Kolbens (11) im Brennraum (10) des Kolbens (11) gezündet wird.

2. Verfahren nach Anspruch 1
dadurch **gekennzeichnet**,
dass zündfähige Gemisch im Verdichtungstakt bevorzugt im Bereich der Lage der Kurbelwelle von 40° bis 0°, vorzugsweise 30° bis 20° bzw. 30° bis 0° vor deren oberem Totpunkt, gebildet wird.

3. Verfahren nach Anspruch 1 oder 2,
dadurch **gekennzeichnet**,
dass das Einspritzen des Brennstoffs zum Zeitpunkt des Schliessens des Auslassventils (15) beginnt und spätestens bei einer Drehlage der Kurbelwelle von 40° nach dem oberen Totpunkt beendet ist.

4. Viertakt-Verbrennungsmotor mit mehreren zumindest jeweils ein Ansaug- und ein Auslassventil aufweisenden Zylinder-Kolbenanordnungen mit direkter Brennstoffeinspritzung, wobei in den Kolben der Zylinder-Kolbenanordnungen jeweils eine einen Brennraum bildende Kolbenmulde vorgesehen ist,
dadurch **gekennzeichnet**,
dass die Einspritzeinrichtung (12) im oberen Totpunkt des Kolbens (11) in den als Kolbenmulde ausgebildeten Brennraum (10) mündet und in einem Winkel zur Achse (Z) des Zylinders angeordnet ist.

5. Viertakt-Verbrennungsmotor nach Anspruch 4,
dadurch **gekennzeichnet**,
dass eine Zündeinrichtung (14, 141) im oberen Totpunkt des Kolbens (11) in den von der Kolbenmulde gebildeten Brennraum (10) ragt.

6. Viertakt-Verbrennungsmotor nach Anspruch 4 oder 5,
dadurch **gekennzeichnet**,
dass die Einspritzdüse (121) der Einspritzeinrichtung (12) zum zentralen Bereich des als Kolbenmulde ausgebildeten Brennraums (10) hin gerichtet ist.

7. Viertakt-Verbrennungsmotor nach einem der Ansprüche 4 bis 6,
dadurch **gekennzeichnet**,
dass der Brennraum (10) im Boden (111) des Kolbens (11) einen im wesentlichen herzformähnlichen oder zylindrischen Axialquerschnitt aufweist und rotationssymmetrisch ausgebildet ist.

8. Viertakt-Verbrennungsmotor nach einem der Ansprüche 4 bis 6,
dadurch **gekennzeichnet,**
dass der Brennraum (10) im Boden (111) des Kolbens (11) kompakt und mit kleinem Verhältnis zwischen Oberfläche und Rauminhalt des Brennraums (10) ausgebildet ist.

9. Viertakt-Verbrennungsmotor nach einem der Ansprüche 4 bis 8,
dadurch **gekennzeichnet,**
dass Zündeinrichtung (14, 141) und Einspritzeinrichtung (12, 121) einander gegenüberliegend und gegeneinander gerichtet in einem Winkel zur Achse (Z) des Zylinders (13) im Deckel (131) des Zylinders (13) angeordnet sind.

10. Viertakt-Verbrennungsmotor nach einem der Ansprüche 4 bis 8,
dadurch **gekennzeichnet,**
dass bei einer Vierventilanordnung die Zündeinrichtung (14, 141) mittig angeordnet ist.

11. Viertakt-Verbrennungsmotor nach einem der Ansprüche 4 bis 10,
dadurch **gekennzeichnet**,
dass die Tiefe des als Kolbenmulde ausgebildeten Brennraums (10) etwa gleich dem Brennraumdurchmesser oder zumindest gleich dem halben Brennraumdurchmesser ist.

12. Verfahren zum Betrieb eines Viertakt-Dieselverbrennungsmotors mit mehreren zumindest jeweils ein Ansaug- und ein Auslassventil aufweisenden Zylinder-Kolbenanordnungen mit direkter Brennstoffeinspritzung, wobei in den Kolben der Zylinder-Kolbenanordnungen jeweils eine einen Brennraum bildende Kolbenmulde vorgesehen ist,
dadurch **gekennzeichnet**,
dass das Einspritzen einer Voreinspritzmenge des Brennstoffs von maximal 0,6 Vol.% in Luft mit der Einspritzeinrichtung (12, 121) im Ansaugtakt bei geschlossenem Auslassventil (15) im Bereich des oberen Totpunkts des Kolbens (11) beginnt und spätestens bei einer Drehlage der Kurbelwelle von 30° nach dem oberen Totpunkt beendet ist,
dass der Brennstoff in den Brennraum (10) eingespritzt und mit den Verbrennungsgasen in der Kolbenmulde des Kolbens (11) vermischt wird, wobei sich das Gemisch aus Brennstoff und Verbrennungsgasen erwärmt und der Brennstoff verdampft,
dass im Verdichtungstakt die mit der beim vorhergehenden Ansaugtakt durch das Einlassventil (16) in den Zylinderraum eingeflossene Luft sich weitgehend mit dem Gemisch aus der Voreinspritzmenge Brennstoff und Verbrennungsgasen sowie der im Verdichtungstakt entsprechend der geforderten Leistung des Motors eingespritzten restlichen Menge Brennstoff vermischt, um ein zündfähiges Gasgemisch zu bilden,
das im Bereich des oberen Totpunktes zündet.
